# EUROPEAN PATENT APPLICATION

(11) **EP 3 495 902 A1**
(43) Date of publication of application: **12.06.2019**
(21) Application number: 18210788.8
(22) Date of filing: 06.12.2018
(51) Int. Cl.: G05B 19/042, G05B 23/02, G06Q 10/00

(54) **REFRIGERATION DEVICE, CONTROLLER THEREOF, USER ACCESSING TERMINAL, MOBILE TERMINAL, ADMINISTRATION TERMINAL AND ADMINISTRATION SYSTEM OF MAINTENANCE DATA**

(30) Priority: 08.12.2017 CN 201711290085
(71) Applicant: Carrier Corporation, Jupiter, FL 33478 (US)
(72) Inventor: QIAN, Liang, Shanghai, Shanghai 201206 (CN); XIONG, Zhihua, Shanghai, Shanghai 201206 (CN)
(74) Representative: Schmitt-Nilson Schraud Waibel Wohlfrom Patentanwälte Partnerschaft mbB

(57) **Abstract**

The present invention provides a refrigeration device, a controller thereof, a user access terminal, a mobile terminal, a management terminal and a maintenance data management system. The controller for a refrigeration device includes: a controller input module configured to input and process maintenance data of an associated refrigeration device locally; a controller display module configured to display the maintenance data of the associated refrigeration device and a data processing interface; a controller storage module configured to store the maintenance data of the associated refrigeration device; and a controller data synchronization module configured to upload the maintenance data of the associated refrigeration device from the controller to a server periodically and/or in real time. According to the refrigeration device, the controller thereof, the user access terminal, the mobile terminal, the management terminal and the data synchronization system of the present invention, corresponding maintenance data will be synchronized in the controller, the user access terminal, the mobile terminal, the management terminal and the server after general maintenance by a refrigeration device operator or professional maintenance by authorized maintenance personnel, to achieve reliable storage as well as effective management and utilization of the maintenance data and greatly improve the after-sales experience of users of the refrigeration device.

## Description

### Technical Field

The present invention relates to the field of refrigeration, and in particular, to a management system for maintenance data entry and synchronization for a refrigeration device and constituent terminals of the management system.

### Background Art

Due to the complexity of large-scale commercial refrigeration devices, such devices usually require regular maintenance and repair by professional personnel or require on-site repair by professional personnel when an error is reported due to a fault. However, there is no effective means to store and maintain maintenance records of these devices. As a result, it is difficult for users of these refrigeration devices to remember clearly which parts of these refrigeration devices have been repaired, when these refrigeration devices have been repaired or maintained, who maintained these refrigeration devices, and when these refrigeration devices require the next maintenance. These inconveniences will lead to poor after-sales service experience for device users.

### Summary of the Invention

An objective of the present invention is to provide a controller for a refrigeration device that can realize entry, storage and synchronization of maintenance data.

A further objective of the present invention is to provide a user access terminal that can realize entry, storage and synchronization of maintenance data.

Another objective of the present invention is to provide a management terminal that can realize entry, storage and synchronization of maintenance data.

Yet another objective of the present invention is to provide a data management terminal for a refrigeration device that can realize entry, storage and synchronization of maintenance data.

Still another objective of the present invention is to provide a refrigeration device that can realize entry, storage and synchronization of maintenance data.

In order to achieve the objectives of the present invention, according to one aspect of the present invention, a controller for a refrigeration device is provided, including: a controller input module configured to input and process maintenance data of an associated refrigeration device; a controller display module configured to display the maintenance data of the associated refrigeration device and a data processing interface; a controller storage module configured to store the maintenance data of the associated refrigeration device; and a controller data synchronization module configured to synchronize the maintenance data of the associated refrigeration device between the controller and a server periodically and/or in real time.

Optionally, processing on the maintenance data includes viewing the maintenance data, adding the maintenance data, editing the maintenance data and/or deleting the maintenance data.

Optionally, storage status of the maintenance data of the associated refrigeration device includes the following: the maintenance data has been stored into the controller storage module but is editable and/or deletable; or the maintenance data has been stored into the controller storage module and is non-editable and/or undeletable, but has not yet been uploaded to the server; or the maintenance data has been uploaded to the server.

Optionally, the controller further includes a controller login and permission identification module configured to define a user permission based on a login instruction, wherein the user permission includes permissions of general users or permissions of authorized maintenance personnel; the input type of the maintenance data includes reference maintenance data input under the permissions of general users, and reference maintenance data and/or standardized maintenance data input by the authorized maintenance personnel.

Optionally, the permissions of general users include viewing the reference maintenance data, adding the reference maintenance data, editing the reference maintenance data in a preset time period and/or deleting the reference maintenance data in a preset time period; and/or the permissions of authorized maintenance personnel include viewing the reference maintenance data and/or the standardized maintenance data, and/or adding the reference maintenance data and/or the standardized maintenance data, and/or editing the reference maintenance data and/or the standardized maintenance data in a preset time period, and/or deleting the reference maintenance data and/or the standardized maintenance data in a preset time period.

Optionally, the maintenance data has indispensable items, the indispensable items including a maintenance subject, a maintenance object, maintenance time and maintenance content.

Optionally, the maintenance data further includes optional items and/or custom items, the optional items including compressor running time and/or number of compressor startups and/or remarks, and the custom items including content added by users on their own initiative.

Optionally, the maintenance content includes standardized preset child entries for displaying different maintenance items.

In order to achieve the objectives of the present invention, according to another aspect of the present invention, a user access terminal is further provided, including: a user access terminal input module configured to input and process maintenance data of an associated refrigeration device; a user access terminal display module configured to display the maintenance data of the associated refrigeration device and a data processing interface; and a user access terminal data synchronization module configured to synchronize the maintenance data of the associated refrigeration device from the user access terminal to a server in real time.

Optionally, the processing on maintenance data includes viewing the maintenance data, adding the maintenance data, editing the maintenance data and/or deleting the maintenance data.

Optionally, the user access terminal further includes a user access terminal login and permission identification module configured to define a user permission based on a login instruction, wherein the user permission includes permissions of general users, permissions of authorized maintenance personnel or permissions of authorized management personnel; the input type of the maintenance data includes reference maintenance data input under the permissions of general users, and reference maintenance data and/or standardized maintenance data input under the permissions of authorized maintenance personnel and/or the permissions of authorized management personnel.

Optionally, the permissions of general users include viewing the reference maintenance data, adding the reference maintenance data, editing the reference maintenance data in a preset time period and/or deleting the reference maintenance data in a preset time period; and/or the permissions of authorized maintenance personnel include viewing the reference maintenance data and/or the standardized maintenance data, and/or adding the reference maintenance data and/or the standardized maintenance data, and/or editing the reference maintenance data and/or the standardized maintenance data in a preset time period, and/or deleting the reference maintenance data and/or the standardized maintenance data in a preset time period; and/or the permissions of authorized management personnel include viewing the reference maintenance data and/or the standardized maintenance data, and/or adding the reference maintenance data and/or the standardized maintenance data, and/or editing the reference maintenance data and/or the standardized maintenance data, and/or deleting the reference maintenance data and/or the standardized maintenance data.

Optionally, the maintenance data has indispensable items, the indispensable items including a maintenance subject, a maintenance object, maintenance time and maintenance content.

Optionally, the maintenance data further includes optional items and/or custom items, the optional items including compressor running time and/or number of compressor startups and/or remarks, and the custom items including content added by users on their own initiative.

Optionally, the maintenance content includes standardized preset child entries for displaying different maintenance items.

Optionally, the user access terminal is configured as a mobile terminal.

In order to achieve the objectives of the present invention, according to another aspect of the present invention, a management terminal is further provided, including: a management terminal input module configured to input and process maintenance data of one or more associated refrigeration devices; a management terminal display module configured to display the maintenance data of the one or more associated refrigeration devices and a data processing interface; and a management terminal data synchronization module configured to synchronize the maintenance data of the one or more associated refrigeration devices between the management terminal and a server periodically and/or in real time.

Optionally, processing on the maintenance data includes viewing the maintenance data, adding the maintenance data, editing the maintenance data and/or deleting the maintenance data.

Optionally, the management terminal further includes a management terminal login and permission identification module configured to define a user permission based on a login instruction, wherein the user permission includes permissions of authorized management personnel; the input type of the maintenance data includes reference maintenance data and/or standardized maintenance data input under the permissions of authorized management personnel.

Optionally, the permissions of authorized management personnel include viewing the reference maintenance data and/or the standardized maintenance data, and/or adding the reference maintenance data and/or the standardized maintenance data, and/or editing the reference maintenance data and/or the standardized maintenance data, and/or deleting the reference maintenance data and/or the standardized maintenance data.

Optionally, the maintenance data has indispensable items, the indispensable items including a maintenance subject, a maintenance object, maintenance time and maintenance content.

Optionally, the maintenance data further includes optional items and/or custom items, the optional items including compressor running time and/or number of compressor startups and/or remarks, and the custom items including content added by users on their own initiative.

Optionally, the maintenance content includes standardized preset child entries for displaying different maintenance items.

In order to achieve the objectives of the present invention, according to another aspect of the present invention, a data management system for a refrigeration device is further provided, including: the controller for a refrigeration device as described above; the user access terminal as described above; the management terminal as described above; and a server configured to store maintenance data, wherein the maintenance data can be uploaded from the controller, the user access terminal and the management terminal to the server, and downloaded from the server to the controller; and the maintenance data can be read through the user access terminal and the management terminal.

In order to achieve the objectives of the present invention, according to another aspect of the present invention, a refrigeration device is further provided, including the controller as described above.

According to the refrigeration device, the controller thereof, the user access terminal, the mobile terminal, the management terminal and the data synchronization system of the present invention, corresponding maintenance data will be synchronized in the controller, the user access terminal, the mobile terminal, the management terminal and the server after general maintenance by a refrigeration device operator or professional maintenance by authorized maintenance personnel, to achieve reliable storage as well as effective management and utilization of the maintenance data and greatly improve the after-sales experience of users of the refrigeration device.

### Brief Description of the Drawings

FIG. 1 is a schematic diagram of an embodiment of a controller according to the present invention.
FIG. 2 is a schematic diagram of an embodiment of a user access terminal according to the present invention.
FIG. 3 is a schematic diagram of an embodiment of a mobile terminal according to the present invention.
FIG. 4 is a schematic diagram of an embodiment of a management terminal according to the present invention.
FIG. 5 is a schematic diagram of an embodiment of a maintenance data management system according to the present invention.

### Detailed description

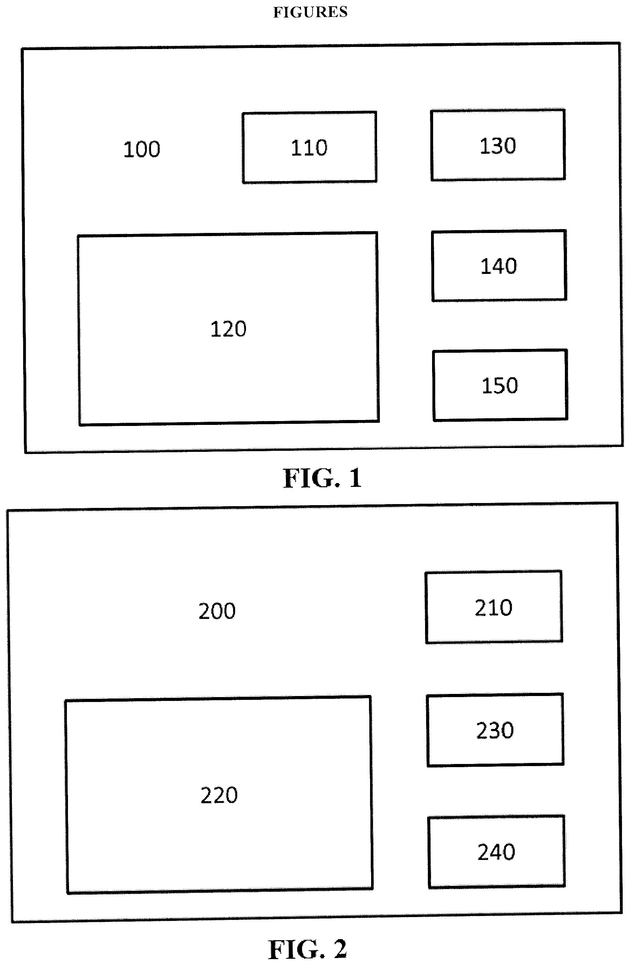

Referring to FIG. 1, a controller for a refrigeration device is provided here. The controller 100 includes: a controller input module 110 configured to input and process maintenance data of an associated refrigeration device; a controller display module 120 configured to display the maintenance data of the associated refrigeration device and a data processing interface; a controller storage module 130 configured to store the maintenance data of the associated refrigeration device; and a controller data synchronization module 140 configured to synchronize the maintenance data of the associated refrigeration device between the controller and a server periodically and/or in real time. For example, the controller data synchronization module uploads data to the server in real time, or downloads data from the server periodically. With such an arrangement, after an operator of the refrigeration device carries out general maintenance for the refrigeration device or after authorized maintenance personnel carry out professional maintenance and repair for the refrigeration device, corresponding maintenance data is entered in the controller of the refrigeration device and then uploaded to the server for synchronization, thus effectively realizing reliable storage of the maintenance data. In addition, it also improves effective management and utilization of the maintenance data. For example, records can be reviewed or reminders can be set up to inform customers of when next general maintenance needs to be carried out, or which parts need to be replaced as their service lives are going to end. This will greatly improve the after-sales experience of users of the refrigeration device.

In addition, based on considerations of safety and standardization of operations, the controller should further include a controller login and permission identification module 150 configured to define a user permission based on a login instruction. The user permission includes permissions of general users or permissions of authorized maintenance personnel. The input type of the maintenance data includes reference maintenance data input under the permissions of general users, and reference maintenance data and/or standardized maintenance data input by the authorized maintenance personnel. The problem of misoperation and information theft can be well avoided by identifying users and grant them different permissions.

Specifically, processing on the maintenance data in the controller at least includes operations such as viewing the maintenance data, adding the maintenance data, editing the maintenance data and/or deleting the maintenance data. For example, prior to each maintenance, historical maintenance data should be viewed to understand historical conditions of the unit such as the operation status, remaining problems, parts that need special attention, so that the current maintenance can be performed more efficiently and accurately. For another example, after each maintenance, a corresponding piece of maintenance data should be added to record the maintenance behavior. For another example, when there is an error in the data entry process, data that has been entered can be re-edited to correct the error; or if there is an error in the data entry process and the time period for editing has elapsed, the maintenance data can also be deleted to ensure the accuracy of the data in the system.

Specifically, when corresponding to different user permissions, the permissions of general users include viewing the reference maintenance data, adding the reference maintenance data, editing the reference maintenance data in a preset time period and/or deleting the reference maintenance data in a preset time period. The permissions of authorized maintenance personnel include viewing the reference maintenance data and/or the standardized maintenance data, and/or adding the reference maintenance data and/or the standardized maintenance data, and/or editing the reference maintenance data and/or the standardized maintenance data in a preset time period, and/or deleting the reference maintenance data and/or the standardized maintenance data in a preset time period. It can be known according to the operating subjects that the reference maintenance data is processed by general users, which, for example, may be the owner of the device or unauthorized third-party maintenance personnel, and so on. For ease of use, the controller grants such personnel sufficient operation permissions, but the content entered by such personnel into the controller is only for reference. Data entered by the authorized maintenance personnel can be used as reference maintenance data or standardized maintenance data, so that they can operate as required. Moreover, it can be known according to the above embodiment that the authorized maintenance personnel can perform any operation on the reference maintenance data entered by the general users, while the general users cannot process the standardized maintenance data entered by the authorized maintenance personnel.

In the controller, the maintenance data of the associated refrigeration device may be in the following states: the maintenance data has been stored into the controller storage module 130 but can be edited and/or deleted; or the maintenance data has been stored into the controller storage module 130 and cannot be edited and/or deleted, but has not yet been uploaded to the server; or the maintenance data has been uploaded to the server. With such an arrangement, it not only provides a certain editable state for error correction, but also ensures that stable maintenance data is uploaded to and stored in the server for later reference and utilization.

In addition, maintenance data needing to be recorded and synchronized also needs to meet particular requirements as illustrated below.

For example, in order to ensure that the maintenance data can clearly show content needed for later retrieval, it should at least have the following indispensable items: a maintenance subject, a maintenance object, maintenance time and maintenance content, so as to indicate who performs the current maintenance operation, which part is the maintenance object, what maintenance content is performed on the maintenance object, and when the maintenance operation is performed.

Certainly, richer content of the maintenance data is preferred as long as the storage capacity and the reading speed of the system are not affected. For example, the maintenance data can further include optional items and/or custom items. The optional items include compressor running time and/or number of compressor startups and/or remarks, so as to show the service life and operation status of core parts of the refrigeration device. For another example, the custom items include content added by users on their own initiative, so that the users can enter corresponding content that needs to be recorded according to their actual needs.

For another example, to make it convenient to enter the maintenance data, the maintenance content can include standardized preset child entries for displaying different maintenance items, such as an implementation form of a drop-down menu. In this case, it is more efficient and convenient for users to select corresponding options from the drop-down menu corresponding to the entries that can be filled with standardized content.

Correspondingly, a refrigeration device is further provided here, which includes the controller 100 in any of the above embodiments, and thus also can record and synchronize data in time to achieve reliable data storage and subsequent utilization.

Referring to FIG. 2, a user access terminal is provided here. The user access terminal 200 includes: a user access terminal input module 210 configured to input and process maintenance data of an associated refrigeration device; a user access terminal display module 220 configured to display the maintenance data of the associated refrigeration device and a data processing interface; and a user access terminal data synchronization module 230 configured to synchronize the maintenance data of the associated refrigeration device from the user access terminal 200 to a server in real time. For example, the maintenance data of the associated refrigeration device is uploaded from the user access terminal 200 to the server in real time or downloaded from the server to the user access terminal 200; or the maintenance data uploaded from the user access terminal 200 to the server is downloaded to the controller 100 for a refrigeration device periodically and/or in real time. With such an arrangement, after authorized maintenance personnel carry out professional maintenance and repair for the refrigeration device, corresponding maintenance data is entered in the user access terminal and then uploaded to the server for synchronization, thus effectively realizing reliable storage of the maintenance data. In addition, authorized management personnel can also manage and utilize the maintenance data effectively at any time. For example, the authorized management personnel can review records or set up reminders to inform customers of when next general maintenance needs to be carried out, or which parts need to be replaced as their service lives are going to end. This will greatly improve the after-sales experience of users of the refrigeration device.

In addition, based on considerations of safety and standardization of operations, the user access terminal should further include a user access terminal login and permission identification module 240 configured to define a user permission based on a login instruction. The user permission includes permissions of general users, permissions of authorized maintenance personnel or permissions of authorized management personnel. The input type of the maintenance data includes reference maintenance data input under the permissions of general users, and reference maintenance data and/or standardized maintenance data input under the permissions of authorized maintenance personnel and/or the permissions of authorized management personnel. The problem of misoperation and information theft can be well avoided by identifying users and granting them different permissions.

Specifically, processing on the maintenance data in the user access terminal at least includes viewing the maintenance data, adding the maintenance data, editing the maintenance data and/or deleting the maintenance data. For example, prior to each maintenance, historical maintenance data should be viewed to understand historical conditions of the unit such as the operation status, remaining problems, parts that need special attention, so that the current maintenance can be performed more efficiently and accurately. For another example, after each maintenance, a corresponding piece of maintenance data should be added to record the maintenance behavior. For another example, when there is an error in the data entry process, data that has been entered can be re-edited to correct the error; or if there is an error in the data entry process and the time period for editing has elapsed, the maintenance data can also be deleted to ensure the accuracy of the data in the system.

Specifically, when corresponding to different user permissions, the permissions of general users include viewing the reference maintenance data, adding the reference maintenance data, editing the reference maintenance data in a preset time period and/or deleting the reference maintenance data in a preset time period. The permissions of authorized maintenance personnel include viewing the reference maintenance data and/or the standardized maintenance data, and/or adding the reference maintenance data and/or the standardized maintenance data, and/or editing the reference maintenance data and/or the standardized maintenance data in a preset time period, and/or deleting the reference maintenance data and/or the standardized maintenance data in a preset time period. The permissions of authorized management personnel include viewing the reference maintenance data and/or the standardized maintenance data, and/or adding the reference maintenance data and/or the standardized maintenance data, and/or editing the reference maintenance data and/or the standardized maintenance data; and/or deleting the reference maintenance data and/or the standardized maintenance data. It can be known according to the operating subjects that general users can only process the reference maintenance data, and some of the processing manners are limited by the entry time. Authorized maintenance personnel and authorized management personnel have higher permissions than the general users and can perform almost any processing on the reference maintenance data and/or the standardized maintenance data. The difference is that the authorized maintenance personnel are only allowed to edit and delete the reference maintenance data and/or the standardized maintenance data within a preset time period. If the editing and deletion operations are beyond the preset time period, the authorized maintenance personnel are suspected of illegally tampering or destroying the maintenance data, and such operations are not supported. As the highest authority owner of the whole system, the authorized management personnel can perform any operation in the system after any event, so as to meet different requirements.

In addition, the maintenance data needing to be recorded and synchronized also needs to meet particular requirements. The specific content and form of the requirements are similar to those in the above embodiment, and thus are not described in detail again.

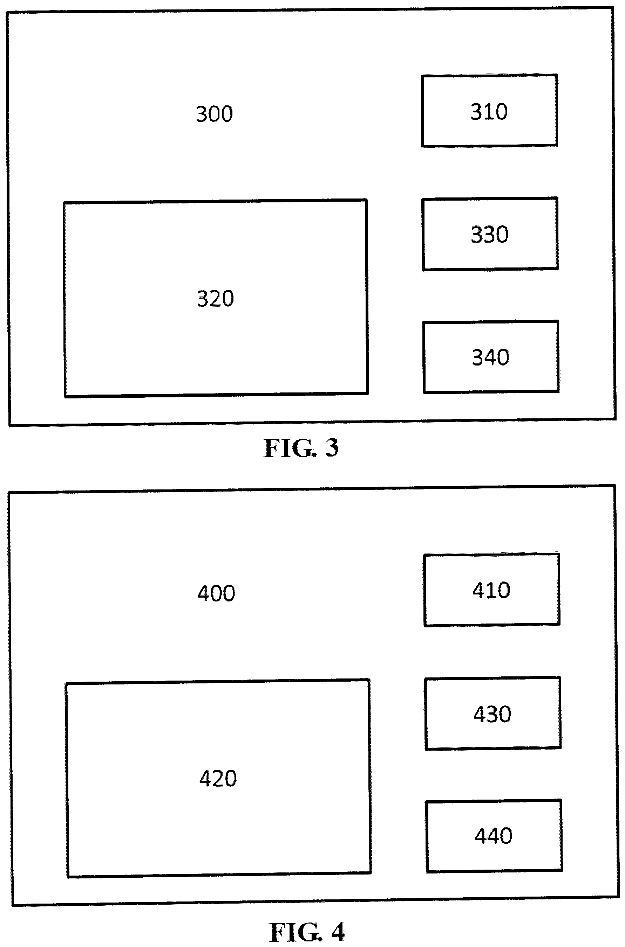

Referring to FIG. 3, a mobile terminal is provided here. The mobile terminal 300 includes: a mobile terminal input module 310 configured to input and process maintenance data of an associated refrigeration device; a mobile terminal display module 320 configured to display the maintenance data of the associated refrigeration device and a data processing interface; and a mobile terminal data synchronization module 330 configured to synchronize the maintenance data of the associated refrigeration device from the mobile terminal 300 to a server in real time. With such an arrangement, after authorized maintenance personnel carry out professional maintenance and repair for the refrigeration device, corresponding maintenance data is entered in the mobile terminal and then uploaded to the server for synchronization, thus effectively realizing reliable storage of the maintenance data. In addition, the maintenance data can also be managed and utilized effectively at any time. For example, records can be reviewed, or reminders can be set up to inform customers of when next general maintenance needs to be carried out, or which parts need to be replaced as their service lives are going to end. This will greatly improve the after-sales experience of users of the refrigeration device.

In addition, based on considerations of safety and standardization of operations, the mobile terminal should further include a mobile terminal login and permission identification module 340 configured to define a user permission based on a login instruction. The user permission includes permissions of authorized maintenance personnel. The input type of the maintenance data includes reference maintenance data and/or standardized maintenance data input under the permissions of authorized maintenance personnel. On some occasions, the mobile terminal can also be open to general users through permission setting, so that the general users can have access to, view and process the maintenance data of the unit at any time. Or, the mobile terminal can also be open to authorized management personnel if necessary, so that the authorized management personnel can process the maintenance data of the associated unit timelier. The problem of misoperation and information theft can be well avoided by identifying users and granting them different permissions.

Specifically, processing on the maintenance data in the mobile terminal at least includes viewing the maintenance data, adding the maintenance data, editing the maintenance data and/or deleting the maintenance data. For example, prior to each maintenance, historical maintenance data should be viewed to understand historical conditions of the unit such as the operation status, remaining problems, parts that need special attention, so that the current maintenance can be performed more efficiently and accurately. For another example, after each maintenance, a corresponding piece of maintenance data should be added to record the maintenance behavior. For another example, when there is an error in the data entry process, data that has been entered can be re-edited to correct the error; or if there is an error in the data entry process and the time period for editing has elapsed, the maintenance data can also be deleted to ensure the accuracy of the data in the system.

Specifically, when corresponding to different user permissions, the permissions of authorized maintenance personnel include viewing the reference maintenance data and/or the standardized maintenance data, and/or adding the reference maintenance data and/or the standardized maintenance data, and/or editing the reference maintenance data and/or the standardized maintenance data in a preset time period, and/or deleting the reference maintenance data and/or the standardized maintenance data in a preset time period. It can be known according to the operating subjects that authorized maintenance personnel have higher permissions than general users and lower permissions than authorized management personnel and can perform almost any processing on the reference maintenance data and/or the standardized maintenance data. However, the authorized maintenance personnel are only allowed to edit and delete the reference maintenance data and/or the standardized maintenance data within a preset time period. If the editing and deletion operations are beyond the preset time period, the authorized maintenance personnel are suspected of illegally tampering or destroying the maintenance data, and such operations are not supported.

In addition, the maintenance data needing to be recorded and synchronized also needs to meet particular requirements. The specific content and form of the requirements are similar to those in the above embodiment, and thus are not described in detail again.

Referring to FIG. 4, a management terminal is provided here. The management terminal 400 includes: a management terminal input module 410 configured to input and process maintenance data of one or more associated refrigeration devices; a management terminal display module 420 configured to display the maintenance data of the one or more associated refrigeration devices and a data processing interface; and a management terminal data synchronization module 430 configured to synchronize the maintenance data of the one or more associated refrigeration devices between the management terminal and a server periodically and/or in real time. For example, the management terminal data synchronization module 430 can be configured to upload the maintenance data of the one or more associated refrigeration devices from the management terminal 400 to the server periodically and/or in real time, and/or download the maintenance data of the one or more associated refrigeration devices from the server to the management terminal 400 and/or the controller 100 for the refrigeration device and/or the user access terminal 200 periodically and/or in real time. With such an arrangement, authorized management personnel can effectively manage and utilize the maintenance data of multiple refrigeration devices respectively at any time. For example, the authorized management personnel can review records or set up reminders to inform customers of when next general maintenance needs to be carried out or which parts need to be replaced as their service lives are going to end. This will greatly improve the after-sales experience of users of the refrigeration devices.

In addition, based on considerations of safety and standardization of operations, the management terminal should further include a management terminal login and permission identification module 440 configured to define a user permission based on a login instruction. The user permission includes permissions of authorized management personnel. The input type of the maintenance data includes reference maintenance data and/or standardized maintenance data input under the permissions of authorized management personnel. In other words, the management terminal here only allows the authorized management personnel to operate so as to ensure the reliability of the data storage of the multiple refrigeration devices connected to the management terminal and the effectiveness of after-sales maintenance and reminders.

Specifically, processing on the maintenance data in the management terminal at least includes viewing the maintenance data, adding the maintenance data, editing the maintenance data and/or deleting the maintenance data. For example, the authorized management personnel can view historical maintenance data to understand historical conditions of the unit such as the operation status, remaining problems, parts that need special attention, so as to remind users timely to carry out next maintenance. For another example, after each maintenance, the authorized management personnel can review the newly added maintenance data to see if there is any error or if the current maintenance behavior has any point worthy of special attention. For another example, when the authorized management personnel finds an error during data entry, data that has been entered can be re-edited to correct the error; or if there is an error in the data entry process and the time period for editing has elapsed, the authorized management personnel can also delete the maintenance data to ensure the accuracy of the data in the system.

Specifically, the permissions of authorized management personnel include viewing the reference maintenance data and/or the standardized maintenance data, and/or adding the reference maintenance data and/or the standardized maintenance data, and/or editing the reference maintenance data and/or the standardized maintenance data, and/or deleting the reference maintenance data and/or the standardized maintenance data. It can be known according to the operating subjects that the authorized management personnel, as the highest authority owner of the whole system, has higher permissions than the authorized maintenance personnel and general users and can perform any processing on the reference maintenance data and/or the standardized maintenance data to meet different requirements.

In addition, the maintenance data needing to be recorded and synchronized also needs to meet particular requirements. The specific content and form of the requirements are similar to those in the above embodiment, and thus are not described in detail again.

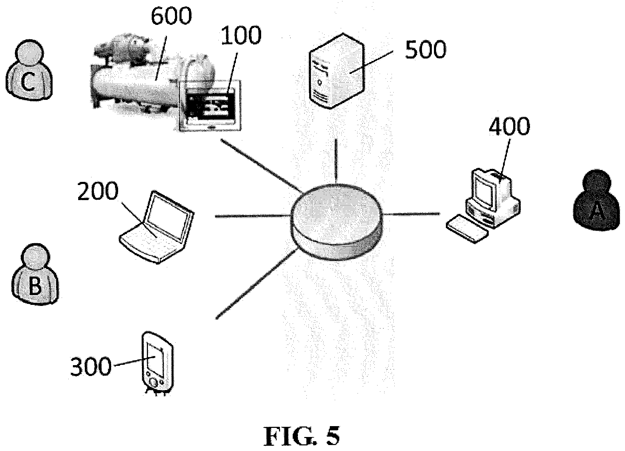

Referring to FIG. 5, a maintenance data management system for a refrigeration device is further provided here, including: the controller 100 for a refrigeration device disclosed in any of the above embodiments; the user access terminal 200 disclosed in any of the above embodiments; the management terminal 400 disclosed in any of the above embodiments; and a server 500, wherein with operations by operators having different permissions, the maintenance data can be uploaded from the controller 100, the user access terminal 200 and the management terminal 400 to the server 500 and downloaded from the server 500 to the controller 100; and the maintenance data can be read through the user access terminal 200 and the management terminal 400. For example, a general user C can upload the maintenance data from the controller 100 to the server 500. An authorized maintainer B can upload the maintenance data from the controller 100 and the user access terminal 200 to the server 500. Authorized management personnel A can upload the maintenance data from the management terminal 400 to the server 500, or download the maintenance data from the server 500 to the controller 100.

In addition, it should be known that the management terminal 400 may be implemented in such a form as the user access terminal 200, for example, a computer webpage. Therefore, the authorized management personnel A can also operate the user access terminal 200 to implement the functions of the management terminal 400. For another example, the user access terminal 200 may also be implemented in such a form as the mobile terminal 300, for example, a mobile phone webpage or an App installed on a mobile terminal. The authorized maintainer B can also operate the mobile terminal 300 to implement the functions of the user access terminal 200.

Optionally, when the authorized maintainer B uses the user access terminal 200 or the mobile terminal 300 to record maintenance data, the maintenance data can be uploaded to the server 500 to provide remote storage; and in addition, if the controller 100 of the refrigeration device is connected to a corresponding network at the same time, the maintenance data can also be synchronized to the controller 100 to provide local storage, so as to realize double insurance.

The above examples mainly illustrate the refrigeration device, the controller thereof, the user access terminal, the mobile terminal, the management terminal and the data synchronization system of the present invention. Some implementation manners of the present invention are described. However, those of ordinary skill in the art should understand that the present invention can be implemented in many other forms without departing from the substance and scope thereof. Therefore, the displayed examples and implementation manners are considered as exemplary instead of limitative, and the present invention can incorporate various modifications and replacements without departing from the spirit and scope of the present invention as defined in the appended claims.

## Claims

1. A controller for a refrigeration device, comprising:
a controller input module configured to input and process maintenance data of an associated refrigeration device;
a controller display module configured to display the maintenance data of the associated refrigeration device and a data processing interface;
a controller storage module configured to store the maintenance data of the associated refrigeration device; and
a controller data synchronization module configured to synchronize the maintenance data of the associated refrigeration device between the controller and a server periodically and/or in real time.

2. The controller according to Claim 1,
wherein processing on the maintenance data comprises viewing the maintenance data, adding the maintenance data, editing the maintenance data and/or deleting the maintenance data;
and/or
wherein storage status of the maintenance data of the associated refrigeration device comprises the following: the maintenance data has been stored into the controller storage module but is editable and/or deletable; or the maintenance data has been stored into the controller storage module and is non-editable and/or undeletable, but has not yet been uploaded to the server; or the maintenance data has been uploaded to the server.

3. The controller according to Claim 1 or 2,
further comprising:
a controller login and permission identification module configured to define a user permission based on a login instruction, wherein the user permission comprises permissions of general users or permissions of authorized maintenance personnel;
wherein the input type of the maintenance data comprises reference maintenance data input under the permissions of general users, and reference maintenance data and/or standardized maintenance data input by the authorized maintenance personnel; and/or
wherein
the permissions of general users comprise viewing the reference maintenance data, adding the reference maintenance data, editing the reference maintenance data in a preset time period and/or deleting the reference maintenance data in a preset time period; and/or
the permissions of authorized maintenance personnel comprise viewing the reference maintenance data and/or the standardized maintenance data; and/or adding the reference maintenance data and/or the standardized maintenance data; and/or editing the reference maintenance data and/or the standardized maintenance data in a preset time period; and/or deleting the reference maintenance data and/or the standardized maintenance data in a preset time period.

4. The controller according to any of Claims 1 to 3,
wherein the maintenance data has indispensable items, the indispensable items comprising a maintenance subject, a maintenance object, maintenance time and maintenance content; and/or
wherein the maintenance data further comprises optional items and/or custom items, the optional items comprising compressor running time and/or number of compressor startups and/or remarks, and the custom items comprising content added by users on their own initiative; or
wherein the maintenance content comprises standardized preset child entries for displaying different maintenance items.

5. A user access terminal, further comprising:
a user access terminal input module configured to input and process maintenance data of an associated refrigeration device;
a user access terminal display module configured to display the maintenance data of the associated refrigeration device and a data processing interface; and
a user access terminal data synchronization module configured to synchronize the maintenance data of the associated refrigeration device from the user access terminal to a server in real time.

6. The user access terminal according to Claim 5, wherein the processing on maintenance data comprises viewing the maintenance data, adding the maintenance data, editing the maintenance data and/or deleting the maintenance data.

7. The user access terminal according to Claim 5 or 6, further comprising:
a user access terminal login and permission identification module configured to define a user permission based on a login instruction, wherein the user permission comprises permissions of general users, permissions of authorized maintenance personnel or permissions of authorized management personnel;
wherein the input type of the maintenance data comprises reference maintenance data input under the permissions of general users, and reference maintenance data and/or standardized maintenance data input under the permissions of authorized maintenance personnel and/or the permissions of authorized management personnel.

8. The user access terminal according to Claim 7, wherein
the permissions of general users comprise viewing the reference maintenance data, adding the reference maintenance data, editing the reference maintenance data in a preset time period and/or deleting the reference maintenance data in a preset time period; and/or
the permissions of authorized maintenance personnel comprise viewing the reference maintenance data and/or the standardized maintenance data; and/or adding the reference maintenance data and/or the standardized maintenance data; and/or editing the reference maintenance data and/or the standardized maintenance data in a preset time period; and/or deleting the reference maintenance data and/or the standardized maintenance data in a preset time period; and/or
the permissions of authorized management personnel comprise viewing the reference maintenance data and/or the standardized maintenance data; and/or adding the reference maintenance data and/or the standardized maintenance data; and/or editing the reference maintenance data and/or the standardized maintenance data; and/or deleting the reference maintenance data and/or the standardized maintenance data.

9. The user access terminal according to any of Claims 5 to 8, wherein the maintenance data has indispensable items, the indispensable items comprising a maintenance subject, a maintenance object, maintenance time and maintenance content; and/or
wherein the maintenance data further comprises optional items and/or custom items, the optional items comprising compressor running time and/or number of compressor startups and/or remarks, and the custom items comprising content added by users on their own initiative; or
wherein the maintenance content comprises standardized preset child entries for displaying different maintenance items.

10. The user access terminal according to any of Claims 5 to 9, wherein the user access terminal is configured as a mobile terminal.

11. A management terminal, further comprising:
a management terminal input module configured to input and process maintenance data of one or more associated refrigeration devices;
a management terminal display module configured to display the maintenance data of the one or more associated refrigeration devices and a data processing interface; and
a management terminal data synchronization module configured to synchronize the maintenance data of the one or more associated refrigeration devices between the management terminal and a server periodically and/or in real time.

12. The management terminal according to Claim 11,
wherein processing on the maintenance data comprises viewing the maintenance data, adding the maintenance data, editing the maintenance data and/or deleting the maintenance data;
and/or
further comprising a management terminal login and permission identification module configured to define a user permission based on a login instruction, the user permission comprising permissions of authorized management personnel;
wherein the input type of the maintenance data comprises reference maintenance data and/or standardized maintenance data input under the permissions of authorized management personnel;
and
wherein, particularly,
the permissions of authorized management personnel comprise viewing the reference maintenance data and/or the standardized maintenance data; and/or adding the reference maintenance data and/or the standardized maintenance data; and/or editing the reference maintenance data and/or the standardized maintenance data; and/or deleting the reference maintenance data and/or the standardized maintenance data.

13. The management terminal according to Claim 11 or 12,
wherein the maintenance data has indispensable items, the indispensable items comprising a maintenance subject, a maintenance object, maintenance time and maintenance content; and
wherein, particularly, the maintenance data further comprises optional items and/or custom items, the optional items comprising compressor running time and/or number of compressor startups and/or remarks, and the custom items comprising content added by users on their own initiative; or
wherein, particularly, the maintenance content comprises standardized preset child entries for displaying different maintenance items.

14. A data management system for a refrigeration device, comprising:
the controller for a refrigeration device according to any of Claims 1 to 4;
the user access terminal according to any of Claims 5 to 10;
the management terminal according to any of Claims 11 to 13; and
a server configured to store maintenance data,
wherein the maintenance data can be uploaded from the controller, the user access terminal and the management terminal to the server and can be downloaded from the server to the controller; and the maintenance data can be read through the user access terminal and the management terminal.

15. A refrigeration device, comprising the controller according to any of Claims 1 to 4.
